# EUROPEAN PATENT SPECIFICATION

(11) **EP 2 881 611 B1**
(45) Date of publication and mention of the grant of the patent: **10.10.2018**
(21) Application number: 14170097.1
(22) Date of filing: 27.05.2014
(51) Int. Cl.: F16D 65/092, F16D 69/04

(54) **Backing plate for brake pad of a disc brake**
Trägerplatte für Bremsbelag einer Scheibenbremse
Plaque de support pour plaquette de frein d'un frein à disque

(30) Priority: 06.12.2013 BR 102013031407
(43) Date of publication of application: 10.06.2015
(73) Proprietor: Fras-Le S.A., 95115-970 Caxias do Sul - RS (BR)
(72) Inventor: Gilberto Lamb, Ricardo, 95795-000 São Vendelino - RS (BR); Athaydes de Vargas, Vinicius, 95099-350 Caxias do Sul - RS (BR)
(74) Representative: Notaro, Giancarlo

(56) References cited:
- DE-U1- 20 011 435
- US-A1- 2005 236 240
- US-A1- 2011 198 170
- US-A1- 2012 160 616

## Description

The present invention relates to a backing plate for brake pad of a disc brake for vehicles, used preferably in commercial vehicles such as trucks, buses, trailers, semi-trailers and relating particularly to a new arrangement in the constructive form of the backing plate of brake pad. Said backing plate comprises a hollow cast iron metal structure provided with a reinforcement in the area of actuation of the brake piston which, combined with the filling of its voids with a polymeric matrix composite material, provides a brake pad with significant improvements in its performance, without changing the characteristics related to mechanical strength, even under the most severe conditions of use of the vehicles.

The new hollow structure of the backing plate aims to replace the traditional backing plates consisting of stamped steel or solid cast iron in order to reduce the total weight of the piece and the heat transfer to other components of the brake system, provide a better interaction between the backing plate structure and the friction material and, finally, reduce the level of noise, said reduction of noise level being achieved by better absorbing the vibrations from the structure, this way favoring the conditions of durability and maintenance of the brake and, consequentially reducing the operating cost and the cost of the product itself.

### Background of the invention

Disc brakes for vehicles, in particular for commercial vehicles, comprise brake pads arranged next to the disc, said brake pads consisting of a plate attached to a friction material.

These plates of the state-of-the art are formed by a solid structure of stamped steel or cast iron. Said plates, by their physical structure, are heavier and, consequently, making the vehicle itself also heavier, resulting in less cargo-carrying capacity.

In addition, current solid backing plates have a high thermal conductivity due to the nature of the materials used, namely, stamped steel or cast iron, raising the temperature of the brake system components and causing faster degradation of some components of the brake system, such as retainers and sealing rubbers, in addition to degrading lubrication itself of the vehicle, leading to higher maintenance costs and reduced service life of the system as a whole.

Another limitation of current state-of-the-art backing plates is the low chemical interaction between metal backing plates and the friction materials used, since there is no chemical affinity with the friction material molded over said plates, leading to the need of creating chemical and mechanical devices to improve such adhesion.

Additionally, current backing plates produce a high level of noise when the brake system is activated, said noise level being caused by the vibration of the solid plate made from cast iron or steel stamped. The vibration occurs due to the high stiffness of the backing plates, making them very sensitive, amplifying the vibrations and producing noises when using the brake system.

The Brazilian patent PI00706786 describes a brake pad for a disc brake of a vehicle, particularly of a commercial vehicle, with a recess formed as a casting part of the lining carrier plate and secured therein. Said brake pad backing plate has a sheet-like basic and integrally cast from raising fitting parts, which are enclosed by the friction material so that at least a part of the fitting parts is at least partially surrounded by an adjoining recess of the base body.

The brake pad described in the document above has the disadvantage of comprising a solid base-body, provided with molten fitting parts, which increasing the weight of the brake pad and also requiring a costly manufacturing process.

Another document found in the state-of-art is the Brazilian patent PI0200449-6, which describes an anchoring holder for disc brake pad to be used in heavy vehicles. Said anchoring holder consisting of a circular anchor channel at the peripheral end of the anchoring holder, inside of which a circular bulge belonging to a friction agglomerate fits, that is, friction material.

The document mentioned above solves the problem of the low chemical interaction between the backing plate and the friction material by means of mechanical devices, in order to avoid the shearing of the friction material from the metal plate, however, said mechanical devices increase too much the total cost of the part. Moreover, the plate is a solid piece, increasing the weight of the assembly, in addition increasing the brake noise level. The high noise occurs due to the high rigidity of the structure, provided by the solid metal plate.

It is, therefore, a need in the state-of-the-art to provide new plates for disc brake pads, said plates being of constructive simplicity, ease to mount with the other components of the brake system, and also wear resistant, resulting in better performance and in lower cost of the product.

These new plates will also help to decrease the weight of the brake pad, and, consequently, the total weight of the vehicle, in addition to reduce the thermal conductivity through the composite materials and improve the interaction between the composite material and the friction material, besides reducing the noise level of the brake pad. A brake pad backing plate according to the preamble of claim 1 is known from US 2005/236240 A1.

### Objectives of the invention

This invention has, as its main objectives, to provide a new backing plate for brake pad of a disc brake, used preferably in commercial vehicles such as trucks, buses, trailers and semi-trailers. Said backing plate comprising a hollow cast iron metal structure provided with a reinforcement in the area of operation of the brake system pistons which, combined with the filling of its voids with a polymer matrix composite material, provides a brake pad with better performance, without changing the characteristics related to mechanical strength and also improving the thermal resistance of the brake pad under the most severe conditions of use of the vehicles.

Another objective of this invention is to reduce the weight of the brake pad as due to a decreased mass in the plate, contributing to a reduction in the unladen mass of the vehicle and a consequent increase in the cargo-carrying capacity.

Another objective is to improve the interaction between the polymeric matrix composite material and the friction material of the brake pad, due to the use of the hollow plate, which strengthens the interaction between the materials.

Another objective is to reduce the level of noise of the brake pad when the brake system is activated, since the combination of the composite material with the hollow plate absorbs better the vibrations generated during the braking process.

Also another objective is to increase the service life of the brake pad, thus minimizing interventions on the vehicle, and, as result, reducing maintenance downtime.

In view of achieving the above objectives, the invention provides a brake pad backing plate according to claim 1.

### Description of the drawings

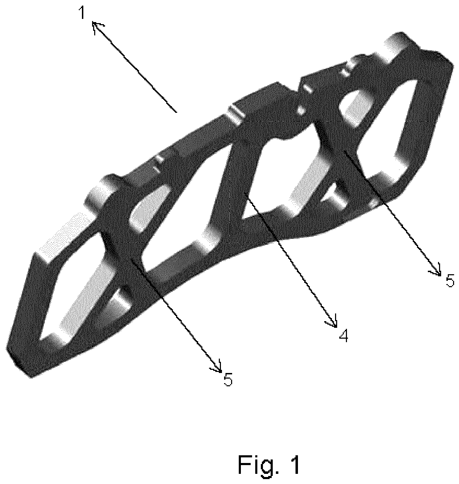

Figure 1 - Perspective view of the backing plate for brake pad of a disc brake, which is the object matter of this invention;

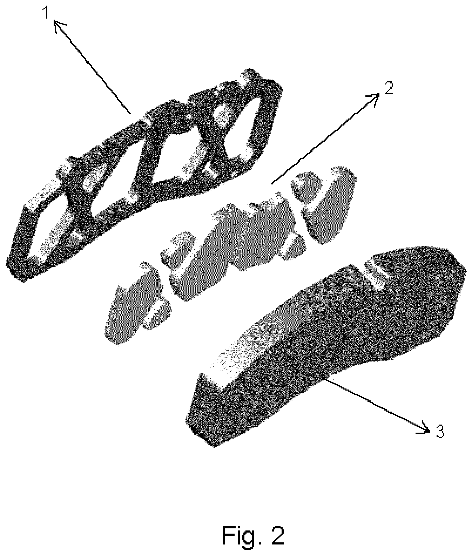

Figure 2 - Exploded view of a brake pad with the backing plate of Figure 1;

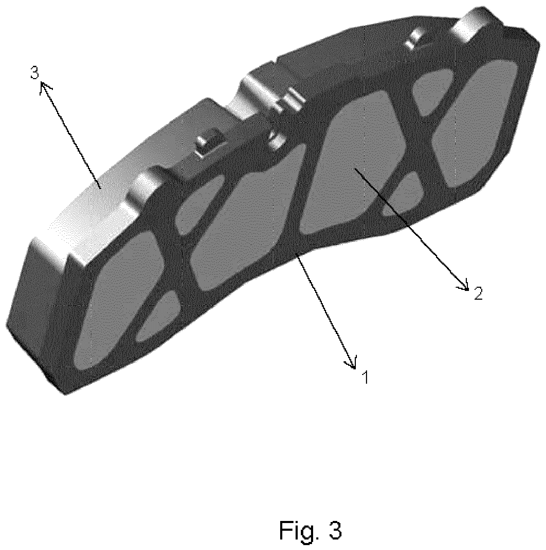

Figure 3 - Perspective view of a brake pad mounted with the backing plate of Figure 1.

### Detailed description of the invention

In accordance with the attached figures, the BACKING PLATE FOR BRAKE PAD OF A DISC BRAKE, is used preferably in commercial vehicles such as trucks, buses, trailers and semi-trailers. Said backing plate (1) comprises a hollow cast iron metal structure, being said structure filled along its thickness with a polymeric matrix composite material (2), which will be molded with the friction material (3). The external configuration of the plate has not been changed in relation to the plates currently used, so that said plates may be adapted to any brake system, preferably in heavy vehicles.

The hollow structure of the backing plate (1) has the shape of two symmetrical parts divided by a central vertical rod (4), each of these parts being provided with a structural reinforcement in the "X" shape (5). This reinforcement is positioned in the middle region, which coincides with the area of operation of each piston of the brake system, which exert pressure so that the brake pad may be pushed during the braking process.

Structural reinforcements (5) are purposefully located in the region of operation of each piston of the brake system, so as to ensure that said pistons are put into contact with the metallic part of the backing plate (1) when the brake system of the vehicle is activated.

The empty areas of the plate (1) are filled with the polymeric matrix composite material (2), which is directly molded with the friction material (3) on the opposite side of contact of the brake system pistons, building a single block that is responsible for the braking process of the vehicle.

The polymeric matrix composite material (2) is pressed/conformed normally inside the empty areas of the backing plate (1). Thus, the outer surface in contact with the pistons at the time of braking is made out of the same polymeric matrix composite material combined with the structural reinforcements (5).

The empty areas of the plate (1), filled with a polymeric matrix composite material, provide a reduction of approximately 30% in weight of the plate when compared with the solid stamped steel plates, providing a significant reduction in the mass of the brake pad structure. The density of the polymeric matrix composite material is also approximately 75% lower when compared with the density of the steel or cast iron in the solid plates.

Another advantage brought by the backing plate under this invention is:
reduction on the heat transfer to the brake system when in use; and
reduction in the noise level during the operation of the brake system, as a result of a decrease in the metal structure of the backing plate, wherein there is a partial replacement with the polymeric matrix composite material, and of a higher vibration absorption in the combined structure of cast iron and polymeric-based composite material.

In addition, the reduction on the heat transfer to the brake system, with consequent decrease in temperature, increases the life of the brake system as a whole, mainly of components such as retainers and sealing rubbers, also benefiting the lubrication of the system.

Another advantage is the improved interaction between the polymeric matrix composite material and the friction material, since the filling of the empty areas in the hollow plate with the polymeric matrix composite material causes the interaction with the friction material to become stronger, resulting in a more interconnected structure. This is due to the fact that the binders in the polymeric matrix composite material have greater chemical affinity with the binding agent used in the manufacturing of friction material.

Another important feature is that the polymeric matrix composite material is concurrently integrated into the same plane of the metal plate, in addition to being very well interconnected with the friction material at same time. This greater interaction dismisses the need to use mechanical and chemical devices to improve adhesion between backing plate and friction material.

It will be easily understood by those skilled in the technique that modifications can be carried out in the invention without leaving the principles exposed in the previous description. These modifications should be considered as included within the scope of the invention. As a result, the particular achievements described above, in detail, are only illustrative and non-restrictive as to the scope of the invention, to which it should be given the full extent of the enclosed claims, and of any and all equivalents thereof.

## Claims

1. Backing plate for a brake pad of a disc brake, to be used preferably in commercial vehicles such as trucks, buses, trailers and semi-trailers, wherein the backing plate (1) comprises a hollow metal structure having empty areas, extending throughout the thickness of said backing plate (1), that are filled by a filling material (2), , wherein the hollow structure of the backing plate (1) is divided into two symmetrical parts separated by a central vertical rod (4), and wherein each of these parts is provided with a structural reinforcement arranged in the middle region, **characterized in that** each structural reinforcement has a "X" shape (5) shape which is positioned so that in use it is located in the region of operation of a corresponding piston of the brake system and **in that** said filling material (2) is a polymeric matrix composite which is adapted to be directly molded with a friction material (3).

## Patentansprüche

1. Trägerplatte für einen Bremsbelag einer Scheibenbremse, die vorzugsweise in gewerblichen Fahrzeugen, etwa Lastwägen, Bussen, Anhängern und Sattelaufliegern, zu verwenden ist, wobei die Trägerplatte (1) eine hohle Metallstruktur mit leeren Bereichen umfasst, die sich durch die Dicke der Trägerplatte (1) erstrecken, die mit einem Füllmaterial (2) gefüllt sind, wobei die hohle Struktur der Trägerplatte (1) in zwei symmetrische Teile unterteilt ist, die durch einen zentralen vertikalen Stab (4) getrennt sind, und wobei jeder dieser Teile mit einem Strukturverstärkungselement, das in dem mittleren Gebiet angeordnet ist, versehen ist,
**dadurch gekennzeichnet, dass**
jedes Strukturverstärkungselement eine "X"-Form (5) hat, die so positioniert ist, dass sie während der Benutzung in dem Arbeitsbereich eines entsprechenden Kolbens des Bremssystems angeordnet ist, und
das Füllmaterial (2) ein Polymermatrix-Verbundstoff ist, der direkt zusammen mit einem Reibungsmaterial (3) formbar ist.

## Revendications

1. Plateau de frein pour plaquette de frein d'un frein à disque, devant être utilisé de préférence dans des véhicules utilitaires tels que des camions, des bus, des remorques et des semi-remorques, où le plateau de frein (1) comprend une structure métallique creuse ayant des zones vides s'étendant sur toute l'épaisseur dudit plateau de frein (1), qui sont remplies par un matériau de remplissage (2), où la structure creuse du plateau de frein (1) est divisée en deux parties symétriques séparées par une tige verticale centrale (4), et où chacune de ces parties est munie d'un renfort structurel agencé dans la zone médiane, **caractérisé en ce que** chaque renfort structurel présente une forme de « x » (5) qui est positionnée de sorte qu'elle soit située, en cours d'utilisation, dans la zone de fonctionnement d'un piston correspondant du système de freinage et **en ce que** ledit matériau de remplissage (2) est un composite à matrice polymère qui est adapté pour être directement moulé avec un matériau de friction (3).
